# EUROPEAN PATENT APPLICATION

(11) **EP 2 472 984 A1**
(43) Date of publication of application: **04.07.2012**
(21) Application number: 10819866.4
(22) Date of filing: 15.09.2010
(51) Int. Cl.: H04W 76/00

(54) **METHOD FOR REALIZING END-TO-END CALL, END-TO-END CALL TERMINAL AND SYSTEM**

(30) Priority: 30.09.2009 CN 200910204402
(71) Applicant: ZTE Corporation, Shenzhen, Guangdong 518057 (CN)
(72) Inventor: SUN, Yizhou, Shenzhen Guangdong 518057 (CN)
(74) Representative: Manitz, Finsterwald & Partner GbR
(86) International application number: PCT/CN2010/076951
(87) International publication number: WO 2011/038637

(57) **Abstract**

A method for realizing an end-to-end call, an end-to-end call terminal and a system are provided in the present invention, wherein the end-to-end call server is not involved, and the end-to-end communication is employed between users, therefore reliability risks of single point failure in registry servers in the existing system are avoided. An end-to-end service is initiated without servers so that trade secrets will not be leaked by the operator, thus, with the present invention, number stealing in end-to-end calls is effectively avoided, and high reliability and security are provided. In addition, after a terminal logs in the network with an architecture based on the separation of identity and location, and initiates the end-to-end call function, the terminal is able to use the end-to-end call service directly without the need to enter a username and a password to log in the end-to-end call system, thus it is more convenient to use.

## Description

### Technical Field

The present invention relates to the field of communication and Internet, and in particular, to a method for implementing an end-to-end call, an end-to-end call terminal and a system.

### Background Art

### Identity and location separation technology

The study on the next-generation information network architecture is one of the currently hottest subjects. At present, the point accepted by most studies is: the future network will use the Internet as the uniform bearer network. Internet always develops fast from its emergence, and has currently become the most successful and most vital communication network, and its characteristics including flexible expandability, highly-efficient packet switching, powerful functions of the terminal meet the design requirement of the new-generation network very well. Internet will be the main reference blueprint of the design of the new-generation network.

However, the structure of the internet is still far from perfection, and there are many significant design problems, among which the relatively typical one is the problem of dual attributes of the IP address, i.e., an IP address does not only represent a user identity, but also represents the network topology where the user locates, i.e., the dual attributes of the IP address. Internet is invented in 1970s, and people could hardly predict that there will exist so many mobile terminals and multi-home terminals around the world, therefore, the Internet protocol stack at that time is designed mainly for terminals connected in a "fixed" manner. In the network environment of that time, since a terminal is substantially not able to move from a location to another, the transmitting address is precisely the receiving address, and the path is reversible, an IP address with the dual attributes of identity and location can work very well, and the identity attribute and the location attribute of the IP address has no confliction therebetween. IP address representing both identity and location exactly meets the network requirement of that time. In view of the network environment of that time, this kind of design scheme is simple and efficient, and the layer structure of the protocol stack is simplified. However, it is beyond doubt that there is an internal contradiction between the identity attribute and the location attribute of the IP address. The identity attribute of the IP address requires that any two IP addresses are equal, and although IP addresses can be distributed according to the organization, continuously coded IP addresses are not necessarily related, or are not necessarily related in terms of topology location; the location attribute of the IP address requires that the IP addresses are distributed based on the network topology (rather than the organization), and all the IP addresses in the same sub-network should be in a block of continuous IP addresses so as to be able to make the IP address prefixes in the network topology converge, thereby reducing the number of items of the routing table of the routing device, and ensuring the expandability of the routing system.

Generally, the internal contradiction of the dual attributes of the IP address will cause the following main problems.
1. Problem of routing expandability. There is a basic assumption for the expandability of the routing system of the Internet:
   "addresses are distributed according to the topology, or alternatively the topology is deployed according to the addresses". The identity attribute of an IP address requires that the IP addresses are distributed based on the organization (rather than the network topology) to which the terminal belongs, and such distribution should have a certain stability and cannot change frequently; while the location attribute of the IP address requires that the IP addresses are distributed based on network topology so as to ensure the expandability of the routing system. Thus, the two attributes of the IP address have a conflict, which finally cause the expandability problem of the routing system of the Internet.
2. Mobility problem. The identity attribute of the IP address requires that the IP address should not change as the terminal location changes so as to ensure that the communication bound on the identity will not discontinue, and meanwhile to ensure that after a terminal moves, other terminals can still establish communication connection with the terminal using its identity; while the location attribute of the IP address requires that the IP address changes as the terminal location changes so that IP address can converge in the new network topology, otherwise the network has to retain a separate routing information for the terminal after movement, thus causing rapid rise of the items of the routing table.
3. Multi-home problem. Multi-homeness generally means that a terminal or a network accesses to the Internet through networks of a plurality of ISPs (Internet Service Provider) simultaneously. The advantages of the multi-home technology comprise increase of reliability of the network, supporting flow load balancing between a plurality of ISPs and increasing the overall available bandwidth, and so on. However, the internal contradiction of the dual attributes of the IP address makes the multi-home technology hard to be implemented. The identity attribute of the IP address requires that a multi-home terminal always presents an unchanged identity to other terminals, no matter through how many ISPs the multi-home terminal accesses to the Internet; while the location attribute of the IP address requires that a multi-home terminal uses different IP addresses for communication in different ISP networks so as to ensure that the IP address of the terminal can converge in the topology of the ISP network.
4. Problem of security and location privacy. Since the IP address contains both the identity information and location information of a terminal, the opposite communication end and Malicious eavesdroppers can simultaneously obtain both the identity information and topology location information of the terminal according to the IP address of the terminal.

Generally speaking, ever since the setup of the system structure of the traditional Internet, the technology environment and the user group of the Internet have both change dramatically, and the Internet needs an innovation along with the change. The problem of dual attributes of the IP address is one of the basic reasons for impeding the continual development of the Internet, and it is a good idea for solving the problem which the Internet is faced with to separate the identity attribute of the IP address from its location attribute. The new network will be designed based on this idea, and a network structure of separately mapping the identity information and location information is provided to solve some severe drawbacks existing in the current Internet.

In order to solve the identity and location problem, a large amount of study and research have been made in the industry, and the basic concepts of all identity and location separation schemes are to separate the dual attributes of identity and location that are originally bound on the IP address. Wherein, some schemes use the URL (Uniform Resource Locator, which is an identifying method for completely describing the addresses of the webpage and other resources in the Internet) in the application layer or FQDN (Fully Qualified Domain Name) as the access identifier of the terminal, for example, IPNL (IP Next Layer, which is a mode for NAT expandability architecture), TRIAD (A Scalable Deployable NAT-based Internet Architecture) and so on; some schemes incorporates new name space as the access identifier, for example, HIP (Host Identity Protocol) adds a host identifier in the network layer using the IP address as the identifier; some schemes classify the IP addresses, and part of the IPs is used as access identifier and part of IPs is used as location identifier, for example, LISP (Locator/ID Separation Protocol), and so on; the patent CN200610001825 of Zhang Hongke in Northern Jiaotong University also provides a solution, where the identity and location separation problem is solved by using an IP address as the location identifier of the host, and an end host identifier is incorporated as the access identifier.

All of the above proposals and schemes propose the solution for identity and location separation in the existing network architecture in view of part of the problem, and identity and location separation is the core technology in the future data communication network, especially in the mobile data communication network.

### End-to-end call technology

There are two ways of technologies to implement VOIP (Voice over Internet Protocol), wherein, one is the technique using Client-Server mode, i.e., the network has a VOIP server, such as a media gateway controller, gateway gatekeeper, a proxy server, and so on, which is responsible for processing call routing, call signaling, media control and so on. H.323, SIP (Session Initiation Protocol) and soft switching all adopt the VOIP technology of Client-Server mode. This kind of technology is widely used by the traditional telecommunication operators, since the operators can control the call and signaling flow of VOIP and thus charge on the service.

Another technology for implementing VOIP adopts the way of end-to-end call, i.e., the network does not have any server in the center or control position, and the terminal directly completes the whole flow of call and signaling with the opposite terminal. This kind of technology has Internet characteristics, i.e., free and open. Skype is precisely a VOIP technique using end-to-end call, and its emergence brings along a strong shock wave to the traditional telecommunication industry. By now, the number of global registered users of Skype is up to 0.25 billion, with addition of 0.155 million persons per day, and the global call volume of Skype has reached 6 billion by March 14, 2005. Skype is still rapidly permeating into various countries, and the latest statistics show that the number of minutes using the Skype call technology has accounted for 46.2% of the number of minutes of American VoIP, and this part of users substantially uses the telephone service "for free".

The end-to-end call in the existing Internet works in the application layer, and a user is identified through a user name and a password. However, the Internet performs addressing according to the IP address, and cannot performs addressing according to the user name or password, so the network still needs a register server located in the central position for establishing a mapping relationship between the user name in the application layer and the IP address in the network layer, and returning the mapping relationship to the user. The register server also needs to check and ensure the global uniqueness of the user name.

None of the various networks of identity and location separation architecture that have been disclosed currently has provided a specific application scheme for the end-to-end call, and of course the above defects of the end-to-end call have not been solved either.

### Summary of the Invention

The technical problem to be solved in the present invention is to provide a method for implementing end-to-end call, and an end-to-end call terminal and a system to implement an end-to-end call based on a new network and meanwhile simplify the flow and system of the end-to-end call.

In order to solve the above technical problem, the present invention provides a method for implementing an end-to-end call. This method is implemented based on a network of identity and location separation architecture (i.e., a new network) with no need of the participation of an end-to-end call service server. The method comprises an end-to-end call establishing flow comprising the following steps of:
a local terminal sending a call establishing request upon receiving an entered call origination operation, wherein, a source address and a destination address are an access identifier of the local terminal and an access identifier of an opposite terminal respectively, and the new network routing forwarding the call establishing request to the opposite terminal according to a mapping relationship between the access identifiers and routing identifiers;
the opposite terminal receiving the call establishing request, replying a call establishing response, wherein, a source address and a destination address are the access identifier of the local terminal and the access identifier of the opposite terminal respectively, and the new network routing forwarding the call establishing response to the local terminal according to the mapping relationship between the access identifiers and routing identifiers.

Preferably, the local terminal and the opposite terminal are collectively called as a terminal, the terminal logs in the new network before a call is established, and the log-in process comprises:
the terminal sending an authentication request, wherein its access identifier of the terminal and a password entered by a user are carried;
an access service node (ASN) of the new network sending the authentication request to an authentication server;
the authentication server authenticating the access identifier and the password, and returning an authentication response according to an authentication result;
the ASN allowing or impeding the terminal from logging according to the authentication response.

Preferably, the method further comprises a process of end-to-end call release comprising the following steps of:
the local terminal receiving an entered hang-up signal, and sending a call release message to the opposite terminal, wherein, a source address and a destination address are the access identifier of the local terminal and the access identifier of the opposite terminal respectively, and the new network routing forwarding the call release message to the opposite terminal according to the mapping relationship between the access identifiers and routing identifiers; or
the opposite terminal receiving an entered hang-up signal, and sending a call release message to the local terminal, wherein, a source address and a destination address are the access identifier of the opposite terminal and the access identifier of the local terminal respectively, and the network of identity and location separation architecture routing forwarding the call release message to the local terminal according to the mapping relationship between the access identifiers and routing identifiers.

In order to solve the above technical problem, the present invention further provides a method for implementing an end-to-end call. This method is implemented based on a new network with no need of the participation of an end-to-end call service server. The process of transmitting an end-to-end call message between a local terminal and an opposite terminal comprises:
A, the local terminal generating and sending an end-to-end call message, wherein an access identifier of the opposite terminal is carried;
B, the new network routing forwarding the end-to-end call message to the opposite terminal according to the access identifier of the opposite terminal;
C, the opposite terminal receiving the end-to-end call message and executing corresponding operation and processing.

Preferably, in step A, the local terminal generates the end-to-end call message according to a received user entry operation, and when the user entry operation is call origination, the end-to-end call message is a call establishing request; when the user entry operation is off-hook, the end-to-end call message is a call establishing response; in step C, when the end-to-end call message received by the opposite terminal is the call establishing request, the opposite terminal generates a ringing signal to inform the user; when the end-to-end call message received by the opposite terminal is the call establishing response, the opposite terminal generates a call establishing acknowledgement, and sends to the local terminal, thereby establishing a call.

Preferably, in step A, the end-to-end call message is a call release request generated by the local terminal according to the received hang-up operation entered by the user; in step C, the call is released after the opposite terminal receives the call release request.

Preferably, in step A, the end-to-end call message is a state maintaining message for indicating an end-to-end call state of the local terminal generated by the local terminal according to a state maintaining policy, and in step C, the opposite terminal maintains the locally stored state of the local terminal according to the state maintaining message.

In order to solve the above technical problem, the present invention further provides an end-to-end call system, comprising an end-to-end call terminal and a new network connected with the end-to-end call terminal, wherein,
the end-to-end call terminal has an end-to-end call function and is configured to generate and send an end-to-end call message, wherein an access identifier of an end-to-end call opposite terminal is carried; the end-to-end call terminal is further configured to receive the end-to-end call message, and process the received end-to-end call message correspondingly;
the new network is configured to receive the end-to-end call message sent by the end-to-end call terminal, and routing forward the end-to-end call message to the end-to-end call opposite terminal according to a mapping relationship between the access identifier and a routing identifier.

Preferably, the end-to-end call terminal comprises: an interface module, an encapsulation transmitting module, a receiving and analyzing module, and an access identifier managing module, wherein:
the interface module is configured to receive a message or a command entered by a user and inform the encapsulation transmitting module, and the interface module is further configured to inform the user of the received end-to-end call message;
the encapsulation transmitting module is connected with the interface module and is configured to obtain an access identifier (i.e., AID) of the local terminal and an AID of the opposite terminal from the access identifier managing module, generate the end-to-end call message, wherein, a source address and a destination address are the AID of the local terminal and the AID of the opposite terminal respectively; the encapsulation transmitting module is further configured to send the end-to-end call message;
the receiving and analyzing module is connected with the interface module and is configured to receive and analyze the received end-to-end call message, and the receiving and analyzing module is further configured to send the end-to-end call message to the interface module;
the access identifier managing module is connected with the encapsulation transmitting module and is configured to manage the AID of the local terminal and the AID of the opposite terminal.

Preferably, the interface module is configured to, when the received entered operation is call origination, inform the encapsulation transmitting module to generate an end-to-end call message of a call establishing request; when the content of the received end-to-end call message is the call establishing request, generate a ringing signal to inform the user; when the received entered operation is off-hook, inform the encapsulation transmitting module to generate an end-to-end call message of a call establishing response; when the received end-to-end call message is the call establishing response, inform the encapsulation transmitting module to generate an end-to-end call message of a call establishing acknowledgement.

Preferably, the end-to-end call message is a video packet or a voice packet generated according to entered voice or video information, or a request message for requesting to be a friend or inviting to join in a group that is generated according to an entered command.

Preferably, the terminal further comprises a state maintaining module connected with the encapsulation transmitting module;
the receiving and analyzing module is further configured to, if the analyzed end-to-end call message is state maintaining information, send the state maintaining information to the state maintaining module;
the state maintaining module is configured to store states of the local terminal and the opposite terminal, generate state maintaining information for indicating an current end-to-end call state according to a state maintaining policy, and inform the encapsulation transmitting module to generate an end-to-end call message of the state maintaining message; and, receive the state maintaining information sent by the receiving and analyzing module and perform state maintenance according to the state maintaining information;
the encapsulation transmitting module defaults that the opposite terminal of the state maintaining message is all friends and group members in active state.

In order to solve the above technical problem, the present invention further provides an end-to-end call terminal, which implements an end-to-end call through a new network and comprises: an interface module, an encapsulation transmitting module, a receiving and analyzing module, and an access identifier managing module, wherein:
the interface module is configured to receive a message or a command entered by a user and inform the encapsulation transmitting module, and the interface module is further configured to inform the user of the received end-to-end call message;
the encapsulation transmitting module is connected with the interface module and is configured to obtain an AID of the local terminal and an AID of the opposite terminal from the access identifier managing module, generate the end-to-end call message, wherein, a source address and a destination address are the AID of the local terminal and the AID of the opposite terminal respectively; the encapsulation transmitting module is further configured to send the end-to-end call message;
the receiving and analyzing module is connected with the interface module and is configured to receive and analyze the received end-to-end call message, and the receiving and analyzing module is further configured to send the end-to-end call message to the interface module;
the access identifier managing module is connected with the encapsulation transmitting module and is configured to manage the AID of the local terminal and the AID of the opposite terminal.

Preferably, the interface module is configured to, when the received entered operation is call origination, inform the encapsulation transmitting module to generate an end-to-end call message of a call establishing request; when the content of the received end-to-end call message is the call establishing request, generate a ringing signal to inform the user; when the received entered operation is off-hook, inform the encapsulation transmitting module to generate an end-to-end call message of a call establishing response; when the received end-to-end call message is the call establishing response, inform the encapsulation transmitting module to generate an end-to-end call message of a call establishing acknowledgement.

Preferably, the end-to-end call message is a video packet or a voice packet generated according to entered voice or video information, or a request message for requesting to be a friend or inviting to join in a group that is generated according to an entered command.

Preferably, the terminal further comprises a state maintaining module connected with the encapsulation transmitting module;
the receiving and analyzing module is further configured to, if the analyzed end-to-end call message is state maintaining information, send the state maintaining information to the state maintaining module;
the state maintaining module is configured to store states of the local terminal and the opposite terminal, generate state maintaining information for indicating an current end-to-end call state according to a state maintaining policy, and inform the encapsulation transmitting module to generate an end-to-end call message of the state maintaining message; and, receive the state maintaining information sent by the receiving and analyzing module and perform state maintenance according to the state maintaining information;
the encapsulation transmitting module defaults that the opposite terminal of the state maintaining message is all friends and group members in active state.

The method for implementing an end-to-end call, the end-to-end call terminal and the system provided in the present invention do not involve the end-to-end call service server, and the end-to-end communication is employed between users, therefore the reliability risk of single-point failure in the registration server in the existing system is avoided. An end-to-end service is initiated without servers so that trade secrets will not be leaked by the operator, and thus the present invention effectively avoids number stealing in end-to-end calls, and has high reliability and security. In addition, after a terminal logs in the new network and initiates the end-to-end call function, the terminal can directly use the end-to-end call service with no need of entering a username and a password to log in the end-to-end call system, and thus it is more convenient to use.

### Brief Description of Drawings

FIG. 1 is a schematic diagram of the architecture of the new network according to an example of the present invention.
FIG. 2 is a schematic diagram of the method for implementing an end-to-end call according to an example of the present invention.
FIG. 3 is a schematic flow diagram of establishing an end-to-end call according to an example of the present invention.
FIG. 4 is a schematic module structure diagram of the end-to-end call terminal according to an example of the present invention.

### Preferred Embodiments of the Invention

The method for implementing an end-to-end call, the end-to-end call terminal and the system of the present invention are implemented based on a network of identity and location separation architecture (referred to as a new network hereinafter) without the participation of any special end-to-end call service server (for example, the register server in the prior art), and the end-to-end service function can be achieved once the terminal logs in the new network, thus simplifying the process and system for implementing the end-to-end call.

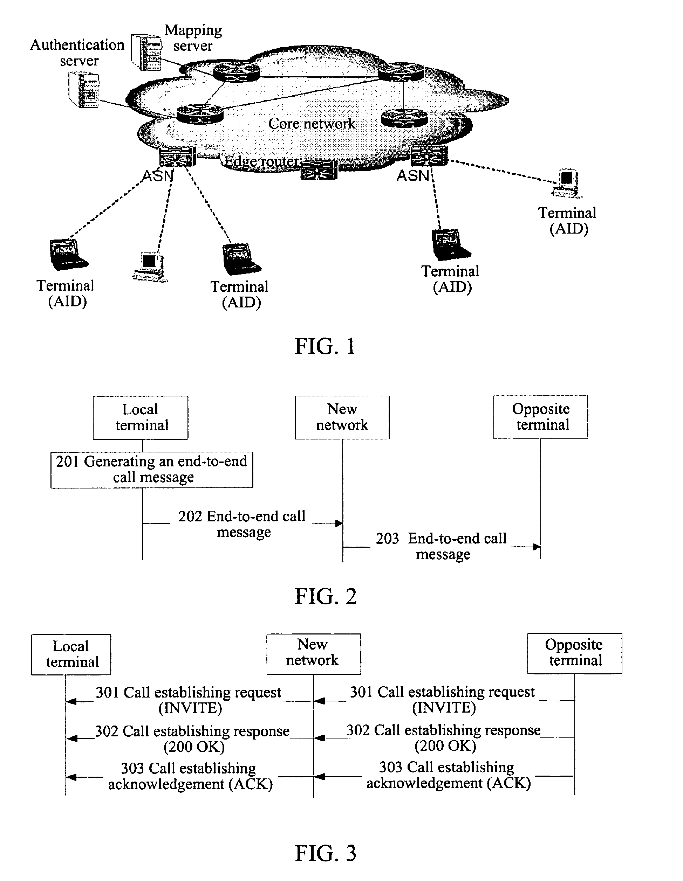

The so-called new network in the present invention, as shown in FIG. 1, comprises but not limited to the various specific implementations of the identity and location separation architecture that have been proposed by now, and has the following characteristics:
1. the terminal has an access identifier (AID) indicating the identity and a routing location identifier (RID) indicating the location, wherein, the AID has uniqueness and inherence, the routing location identifier is an identifier for routing data to the terminal and has certain relativity, and when the terminal moves, the routing location identifier may change;
2. the new network routing forwards the data sent by the terminal to the opposite terminal according to the mapping relationship between the access identifier and the routing identifier as well as particular routing rules.

In the new network, the end-to-end call system of the present invention logs and performs addressing according to the user AID. The user AID is a network-layer identifier and is similar to the user's mobile phone number, is universally used in the network and moves along with the user, so the network does not need end-to-end call service server any more. Therefore, it is more easy and convenient to implement an end-to-end call in the new network.

The end-to-end call system of the present invention comprises an end-to-end call terminal and a net network connected with the end-to-end call terminal, wherein,
the end-to-end call terminal has an end-to-end call function and is configured to generate and send an end-to-end call message, wherein an access identifier of an end-to-end call opposite terminal is carried; the end-to-end call terminal is further configured to receive the end-to-end call message, and process the received end-to-end call message correspondingly;
the new network is configured to receive the end-to-end call message sent by the end-to-end call terminal, and routing forward the end-to-end call message to the end-to-end call opposite terminal according to a mapping relationship between the access identifier and a routing identifier.

Based on the above system, the method for implementing an end-to-end call in the invention does not need the participation of an end-to-end call service server, and as shown in FIG.2, the process of transmitting an end-to-end call message between a local terminal and an opposite terminal comprises:
step 201: the local terminal generating and sending an end-to-end call message, wherein an access identifier of the opposite terminal is carried;
step 202: the new network routing forwarding the end-to-end call message to the opposite terminal according to the mapping relationship between the access identifier and the routing identifier;
step 203: the opposite terminal receiving the end-to-end call message and executing corresponding operation and processing.

Regarding the end-to-end call establishment, in step 201, the local terminal generates the end-to-end call message according to a received user entry operation, and when the user entry operation is call origination, the end-to-end call message is a call establishing request; when the user entry operation is off-hook, the end-to-end call message is a call establishing response; in step 203, when the end-to-end call message received by the opposite terminal is the call establishing request, the opposite terminal generates a ringing signal to inform the user; when the end-to-end call message received by the opposite terminal is the call establishing response, the opposite terminal generates a call establishing acknowledgement, and sends to the local terminal, thereby establishing a call.

Specifically, as shown in FIG. 3, the flow of establishing an end-to-end call comprises the following steps:
step 301: a local terminal sending a call establishing request (INVITE) upon receiving an entered origination operation, wherein, a source address and a destination address are an access identifier of the local terminal and an access identifier of an opposite terminal respectively, and the new network routing forwarding the call establishing request to the opposite terminal according to a mapping relationship between the access identifiers and routing identifiers;
step 302: the opposite terminal receiving the call establishing request, generating a ringing signal, receiving an entered off-hook signal, stopping ringing, and replying a call establishing response (200 OK), wherein, a source address and a destination address are the access identifier of the opposite terminal and the access identifier of the local terminal respectively, and the new network routing forwarding the call establishing response to the local terminal according to the mapping relationship between the access identifiers and routing identifiers;
step 303: the local terminal receiving the call establishing response, replying a call establishing acknowledgement (ACK), wherein, the source address and the destination address are the access identifier of the local terminal and the access identifier of the opposite terminal respectively, and the new network routing forwarding the call establishing acknowledgement to the opposite terminal according to the mapping relationship between the access identifiers and routing identifiers, and the call being established.

Regarding the flow of establishing a call, the flow can be regarded to be ended after completion of steps 301 and 302, but in order that both the communication parties can confirm that the opposite party has entered the conversation state, the local terminal executes step 303 to complete the flow of establishing a call.

In addition, the local terminal and the opposite terminal are collectively called as a terminal, the terminal logs in the network of identity before a call is established, and the log-in process comprises:
step (a), the terminal sending an authentication request, wherein its access identifier and a password entered by a user are carried;
step (b), an access service node (ASN) of the new network sending the authentication request to an authentication server;
step (c), the authentication server authenticating the access identifier and the password, and returning an authentication response to the ASN according to an authentication result;
step (d), the ASN allowing or impeding the terminal from logging according to the authentication response.

Regarding call release, in step 201, the end-to-end call message is a call release request generated by the local terminal according to the received hang-up operation entered by the user; in step 203, the call is released after the opposite terminal receives the call release request.

Regarding state maintenance of the end-to-end call, in step 201, the end-to-end call message is a state maintaining message for indicating an end-to-end call state of the local terminal generated by the local terminal according to a state maintaining policy, and in step 203, the opposite terminal maintains the locally stored state of the local terminal according to the state maintaining message.

The state maintaining policy may be set to send a state maintaining message (for example, one-line heartbeat command) periodically when the end-to-end call function is turned on or turned off, when the user initiatively change the local state, and during the process when the end-to-end call function is turned on.

The so-called end-to-end call message in the present invention refers to any message needing to be sent to the opposite terminal, and it further includes, in addition to the above related messages of call establishment and call release, a request message for requesting to be a friend or inviting to join in a group that is generated according to an entered command is further included, and all of a response to a friend request, a notification of kicking a certain member out of the group, and a video packet or a voice packet generated according to entered voice or video information during the calling process are suitable for the above flow.

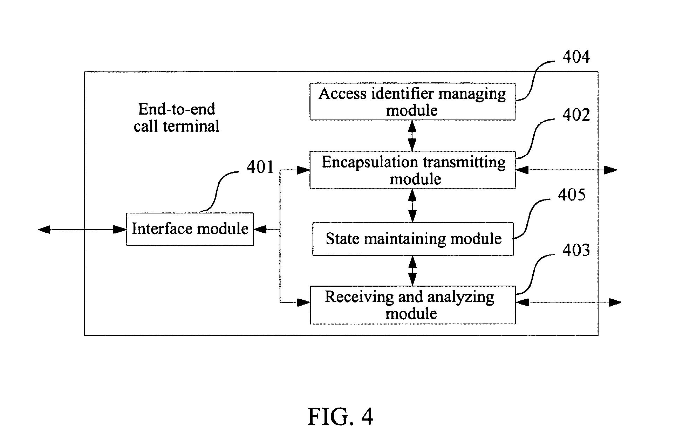

Specifically, the end-to-end call terminal is as shown in FIG. 4, and the end-to-end call terminal implements an end-to-end call through a new network, comprising: an interface module 401, an encapsulation transmitting module 402, a receiving and analyzing module 403, an access identifier managing module 404, and a state maintaining module 405, wherein:
the interface module 401 is configured to receive a message or a command entered by a user and inform the encapsulation transmitting module, and the interface module is further configured to inform the user of the received end-to-end call message;
the encapsulation transmitting module 402 is connected with the interface module 401 and is configured to obtain an access identifier (AID) of the local terminal and an AID of the opposite terminal from the access identifier managing module, generate the end-to-end call message, wherein, a source address and a destination address are the AID of the local terminal and the AID of the opposite terminal respectively; the encapsulation transmitting module is further configured to send the end-to-end call message;
the receiving and analyzing module 403 is connected with the interface module 401 and is configured to receive and analyze the received end-to-end call message, and the receiving and analyzing module is further configured to send the end-to-end call message to the interface module 401; if the analyzed end-to-end call message is state maintaining information, the receiving and analyzing module 403 is further configured to send the state maintaining information to the state maintaining module 405;
the access identifier managing module 404 is connected with the encapsulation transmitting module 402 and is configured to manage the AID of the local terminal and the AID of the opposite terminal;
the state maintaining module 405 is connected with the encapsulation transmitting module 402 and is configured to store states of the local terminal and the opposite terminal, generate state maintaining information for indicating an current end-to-end call state according to a state maintaining policy, and inform the encapsulation transmitting module 402 to generate an end-to-end call message of the state maintaining message; and, receive the state maintaining information sent by the receiving and analyzing module 403 and perform state maintenance according to the state maintaining information; the encapsulation transmitting module 402 defaults that the opposite terminal of the state maintaining message is all friends and group members in active state.

During the process of call establishment, when the entered operation received by the interface module 401 is call origination, the encapsulation transmitting module 402 is informed to generate an end-to-end call message of a call establishing request; when the content of the end-to-end call message received by the interface module 401 is the call establishing request, the interface module 401 generates a ringing signal to inform the user; when the entered operation received by the interface module 401 is off-hook, the encapsulation transmitting module 402 is informed to generate an end-to-end call message of a call establishing response (200 OK); when the end-to-end call message received by the interface module 401 is the call establishing response, the encapsulation transmitting module 402 is informed to generate an end-to-end call message of a call establishing acknowledgement (ACK).

The end-to-end call message may further include a video packet or a voice packet generated according to entered voice or video information, and a request message for requesting to be a friend or inviting to join in a group that is generated according to an entered command.

A person having ordinary skill in the art can appreciate that all or part of the steps in the above step can be implemented by instructing related hardware through a grogram, which may be stored in a computer readable storage medium, such as read-only memory, disk or an optical disk, and so on. Optionally, all or part of the steps in the above examples can be also implemented using one or more integrated circuits. Correspondingly, each module/unit in the above examples can be implemented in the form of hardware, or in the form of software functional module. The present invention is not limited to any specific form of combination of hardware and software.

Although the present invention is described with reference to particular examples, a person having ordinary skill in the art can make modifications and variations without departing from the sprit or scope of the present invention. Such modifications and variations, however, shall be regarded as within the scope of the description and the scope of the attached claims.

### Industrial Applicability

The method for implementing an end-to-end call, the end-to-end call terminal and the system provided in the present invention do not involve the end-to-end call service server, and the end-to-end communication is employed between users, therefore the reliability risk of single-point failure in the registration server in the existing system is avoided. An end-to-end service is initiated without servers so that trade secrets will not be leaked by the operator, and thus the present invention effectively avoids number stealing in end-to-end calls, and has high reliability and security. In addition, after a terminal logs in the new network and initiates the end-to-end call function, the terminal can directly use the end-to-end call service with no need of entering a username and a password to log in the end-to-end call system, and thus it is more convenient to use.

## Claims

1. A method for implementing an end-to-end call, wherein, the method is implemented based on a network of identity and location separation architecture with no need of participation of an end-to-end call service server, and the method comprises an end-to-end call establishing flow comprising:
a local terminal sending a call establishing request upon receiving an entered call origination operation, wherein, a source address and a destination address are an access identifier of the local terminal and an access identifier of an opposite terminal respectively, and the network of identity and location separation architecture routing forwarding the call establishing request to the opposite terminal according to a mapping relationship between the access identifiers and routing identifiers; and
the opposite terminal receiving the call establishing request, replying a call establishing response, wherein, a source address and a destination address are the access identifier of the local terminal and the access identifier of the opposite terminal respectively, and the network of identity and location separation architecture routing forwarding the call establishing response to the local terminal according to the mapping relationship between the access identifiers and routing identifiers.

2. The method according to claim 1, wherein, the local terminal and the opposite terminal are collectively called as a terminal, the method further comprises: the terminal logs in the network of identity and location separation architecture before a call is established, and the log-in process comprises:
the terminal sending an authentication request, wherein the access identifier of the terminal and a password entered by a user are carried;
an access service node (ASN) of the network of identity and location separation architecture sending the authentication request to an authentication server;
the authentication server authenticating the access identifier and the password, and returning an authentication response to the ASN according to an authentication result; and
the ASN allowing or impeding the terminal from logging according to the authentication response.

3. The method according to claim 1, wherein, the method further comprises a process of end-to-end call release comprising:
the local terminal receiving an entered hang-up signal, and sending a call release message to the opposite terminal, wherein, a source address and a destination address are the access identifier of the local terminal and the access identifier of the opposite terminal respectively, and the network of identity and location separation architecture routing forwarding the call release message to the opposite terminal according to the mapping relationship between the access identifiers and routing identifiers; or
the opposite terminal receiving an entered hang-up signal, and sending a call release message to the local terminal, wherein, a source address and a destination address are the access identifier of the opposite terminal and the access identifier of the local terminal respectively, and the network of identity and location separation architecture routing forwarding the call release message to the local terminal according to the mapping relationship between the access identifiers and the routing identifiers.

4. A method for implementing an end-to-end call, wherein, the method is implemented based on a network of identity and location separation architecture with no need of participation of an end-to-end call service server, and a process of transmitting an end-to-end call message between a local terminal and an opposite terminal comprises:
the local terminal generating and sending an end-to-end call message, wherein an access identifier of the opposite terminal is carried;
the network of identity and location separation architecture routing forwarding the end-to-end call message to the opposite terminal according to a mapping relationship between the access identifiers and routing identifiers; and
the opposite terminal receiving the end-to-end call message and executing corresponding operation and processing.

5. The method according to claim 4, wherein,
in the step of the local terminal generating and sending an end-to-end call message, the local terminal generates the end-to-end call message according to a received user entry operation, and when the user entry operation is call origination, the end-to-end call message is a call establishing request; when the user entry operation is off-hook, the end-to-end call message is a call establishing response; in the step of the opposite terminal receiving the end-to-end call message and executing corresponding operation and processing, when the end-to-end call message received by the opposite terminal is the call establishing request, the opposite terminal generates a ringing signal to inform the user; when the end-to-end call message received by the opposite terminal is the call establishing response, the opposite terminal generates a call establishing acknowledgement, and sends to the local terminal, thereby establishing a call; or
in the of step of the local terminal generating and sending an end-to-end call message, the end-to-end call message is a call release request generated by the local terminal according to the received hang-up operation entered by the user; in the step of the opposite terminal receiving the end-to-end call message and executing corresponding operation and processing, the call is released after the opposite terminal receives the call release request; or
in the step of the local terminal generating and sending an end-to-end call message, the end-to-end call message is a state maintaining message for indicating an end-to-end call state of the local terminal generated by the local terminal according to a state maintaining policy, and in the step of he opposite terminal receiving the end-to-end call message and executing corresponding operation and processing, the opposite terminal maintains the locally stored state of the local terminal according to the state maintaining message.

6. An end-to-end call system, wherein, the system comprising end-to-end call terminals and a network of identity and location separation architecture connected with the end-to-end call terminals, wherein,
the end-to-end call terminal has an end-to-end call function and is configured to generate and send an end-to-end call message, wherein an access identifier of an end-to-end call opposite terminal is carried; the end-to-end call terminal is further configured to receive an end-to-end call message, and process a received end-to-end call message correspondingly;
the network of identity and location separation architecture is configured to receive the end-to-end call message sent by the end-to-end call terminal, and routing forward the end-to-end call message to the end-to-end call opposite terminal according to a mapping relationship between the access identifier and a routing identifier.

7. The system according to claim 6, wherein, the end-to-end call terminal comprises: an interface module, an encapsulation transmitting module, a receiving and analyzing module, and an access identifier managing module, wherein:
the interface module is configured to receive a message or a command entered by a user and inform the encapsulation transmitting module, and the interface module is further configured to inform the user of the received end-to-end call message;
the encapsulation transmitting module is connected with the interface module and is configured to obtain an access identifier of the local terminal and an access identifier of the opposite terminal from the access identifier managing module, generate the end-to-end call message, wherein, a source address and a destination address are the access identifier of the local terminal and the access identifier of the opposite terminal respectively; the encapsulation transmitting module is further configured to send the end-to-end call message;
the receiving and analyzing module is connected with the interface module and is configured to receive and analyze the received end-to-end call message, and the receiving and analyzing module is further configured to send the end-to-end call message to the interface module;
the access identifier managing module is connected with the encapsulation transmitting module and is configured to manage the access identifier of the local terminal and the access identifier of the opposite terminal.

8. The system according to claim 7, wherein,
the interface module is configured to, when the received entered operation is call origination, inform the encapsulation transmitting module to generate an end-to-end call message of a call establishing request; when the content of the received end-to-end call message is the call establishing request, generate a ringing signal to inform the user; when the received entered operation is off-hook, inform the encapsulation transmitting module to generate an end-to-end call message of a call establishing response; when the received end-to-end call message is the call establishing response, inform the encapsulation transmitting module to generate an end-to-end call message of a call establishing acknowledgement.

9. The system according to claim 7, wherein,
the end-to-end call message is a video packet or a voice packet generated according to entered voice or video information, or a request message for requesting to be a friend or inviting to join in a group that is generated according to an entered command.

10. The system according to claim 7, wherein, the terminal further comprises a state maintaining module connected with the encapsulation transmitting module;
the receiving and analyzing module is further configured to, if the analyzed end-to-end call message is state maintaining information, send the state maintaining information to the state maintaining module;
the state maintaining module is configured to store states of the local terminal and the opposite terminal, generate state maintaining information for indicating an current end-to-end call state according to a state maintaining policy, and inform the encapsulation transmitting module to generate an end-to-end call message of the state maintaining message; and, receive the state maintaining information sent by the receiving and analyzing module and perform state maintenance according to the state maintaining information;
the encapsulation transmitting module defaults that the opposite terminal of the state maintaining message is all friends and group members in active state.

11. An end-to-end call terminal, which implements an end-to-end call through a network of identity and location separation architecture and comprises: an interface module, an encapsulation transmitting module, a receiving and analyzing module, and an access identifier managing module, wherein:
the interface module is configured to receive a message or a command entered by a user and inform the encapsulation transmitting module, and the interface module is further configured to inform the user of the received end-to-end call message;
the encapsulation transmitting module is connected with the interface module and is configured to obtain an access identifier of the local terminal and an access identifier of the opposite terminal from the access identifier managing module, generate the end-to-end call message, wherein, a source address and a destination address are the access identifier of the local terminal and the access identifier of the opposite terminal respectively; the encapsulation transmitting module is further configured to send the end-to-end call message;
the receiving and analyzing module is connected with the interface module and is configured to receive and analyze a received end-to-end call message, and the receiving and analyzing module is further configured to send the end-to-end call message to the interface module;
the access identifier managing module is connected with the encapsulation transmitting module and is configured to manage the access identifier of the local terminal and the access identifier of the opposite terminal.

12. The terminal according to claim 11, wherein,
the interface module is configured to, when the received entered operation is call origination, inform the encapsulation transmitting module to generate an end-to-end call message of a call establishing request; when the content of the received end-to-end call message is the call establishing request, generate a ringing signal to inform the user; when the received entered operation is off-hook, inform the encapsulation transmitting module to generate an end-to-end call message of a call establishing response; when the received end-to-end call message is the call establishing response, inform the encapsulation transmitting module to generate an end-to-end call message of a call establishing acknowledgement.

13. The terminal according to claim 11, wherein,
the end-to-end call message is a video packet or a voice packet generated according to entered voice or video information, or a request message for requesting to be a friend or inviting to join in a group that is generated according to an entered command.

14. The terminal according to claim 11, wherein, the terminal further comprises a state maintaining module connected with the encapsulation transmitting module;
the receiving and analyzing module is further configured to, if the analyzed end-to-end call message is state maintaining information, send the state maintaining information to the state maintaining module;
the state maintaining module is configured to store states of the local terminal and the opposite terminal, generate state maintaining information for indicating an current end-to-end call state according to a state maintaining policy, and inform the encapsulation transmitting module to generate an end-to-end call message of the state maintaining message; and, receive the state maintaining information sent by the receiving and analyzing module and perform state maintenance according to the state maintaining information;
the encapsulation transmitting module defaults that the opposite terminal of the state maintaining message is all friends and group members in active state.
